# EUROPEAN PATENT APPLICATION

(11) **EP 1 022 640 A2**
(43) Date of publication of application: **26.07.2000**
(21) Application number: 99309181.8
(22) Date of filing: 18.11.1999
(51) Int. Cl.: G06F 1/00

(54) **Provision of trusted services**

(30) Priority: 20.01.1999 GB 9901127
(71) Applicant: Hewlett-Packard Company, Palo Alto, California 94304 (US)
(72) Inventor: Harrison, Keith Alexander, Woodcroft, Chepstow NP6 7PX, Wales (GB); Baldwin, Adrian John, Bristol BS16 6LQ, England (GB)
(74) Representative: Lawrence, Richard Anthony

(57) **Abstract**

A device for providing, for a limited period, a trusted service, such as trusted timestamping, without direct connection to a trusted service provider which guarantees the service provided by the device, has a tamper-proof enclosure containing a clock or other trusted service module, a protected memory containing a digital certificate and a private key, a battery for maintaining power to the clock and the protected memory, a processor and an interface for connection to a user's computer or workstation. Upon receipt of a request from the workstation via the interface, the processor obtains the current time from the clock and assembles it into a timestamp incorporating the digital certificate and signed using the private key. The timestamp is then supplied to the user via the interface. A radio receiver module may be included to enable adjustment of the clock in accordance with broadcast time signals. A usage limiter is provided to prevent the device from providing the trusted service outside the limited period of time (or limited number of permitted usages).

## Description

### Technical Field

This invention relates to devices and methods for providing trusted services, for example timestamping of digital media such as word processor documents, digitised images and records of financial transactions.

### Background Art

The advent of digital media and the widespread use of communications technology (such as the Internet) to disseminate such media has been accompanied by the need to provide services which address the social and legal aspects of such media in a manner analogous to services available for tangible media.

Thus there are many cases in which it is desirable to be able to provide a verifiable time and date of existence of a document (i.e. a timestamp). Examples include receipts for payment of goods, contracts and other legal instruments, and documents recording the date of conception of ideas and designs. In the case of tangible documents several arrangements exist for timestamping: mechanically-printed receipts generally have the time and date of printing automatically incorporated; a contract is usually dated at the same time that it is signed by the parties to it; and a provable date of existence of a document can be established by lodging a copy with a trusted organisation, such as a bank, or by having it certified by a trusted official such as a notary.

To facilitate reduced reliance on paper and other physical records in commercial and other activities, corresponding arrangements must be provided for intangible media. Simply adding a digital record of time and date is insufficient, since digital media can in general be much more easily altered in an undetectable manner than is the case with physically-existing records - indeed this is one principal advantage of digital media. Accordingly digital timestamping services have been established. A trusted third party (the timestamp agent or trusted timestamp service provider - TTSP) appends a timestamp *t*₁ to a submitted digital document or data file, digitally signs the composite document (thereby vouching for the time of its existence), and returns the signed document including the timestamp *t*₁ to the submitter. Subsequent verification of the digital signature (for example using private/public key techniques) then establishes, based on trust in the timestamp agent, the existence of the document at the time *t*₁.

Organisations have already been established to act as TTSPs. A user sends data to the TTSP, who sends it back timestamped and signed. In addition if the TTSP is presented with the signed timestamp and the original document it will verify that the document existed at the indicated time and has not been amended, if necessary in a legally recognised declaration. Techniques for such time stamping are described for example in US Patent 5 136 647, and software enabling users to apply timestamping themselves is available.

There are, however, a number of pragmatic difficulties with this approach:
- there is potentially a lot of telecommunications traffic to the TTSP;
- the messages take time to travel, be signed and then returned, giving rise to performance problems;
- the link from the requestor to the TTSP has to be secured, for example, by using Secure Sockets Layer (SSL) software;
- the requestor needs to have access to the Internet;
- if the user is applying timestamping himself then it is likely that the clock is not "trusted" (i.e. there is no guarantee that the clock is accurate and is immune to tampering to change its setting).

It is an object of this invention to facilitate the provision of trusted services, including trusted timestamping.

### Disclosure of Invention

According to one aspect of this invention there is provided a device for providing a local trusted service to a user, having an enclosure and comprising within the enclosure:
a trusted service generator;
a usage limiter;
an identity generator;
a private key store which is inaccessible from outside said enclosure; and
an interface for enabling communication between said user and said trusted service generator.

### Brief Description of Drawings

A device and method in accordance with this invention for providing a trusted service (in this case timestamping) will now be described, by way of example, with reference to the accompanying drawings, in which:
- Figure 1: shows an arrangement incorporating a device for providing trusted timestamping;
- Figure 2: shows the device in more detail;
- Figure 3: shows the contents of a timestamp;
- Figure 4: shows part of the power supply circuitry of the device; and
- Figure 5: shows an interface for coupling the device to a workstation.

### Best Mode for Carrying Out the Invention, & Industrial Applicability

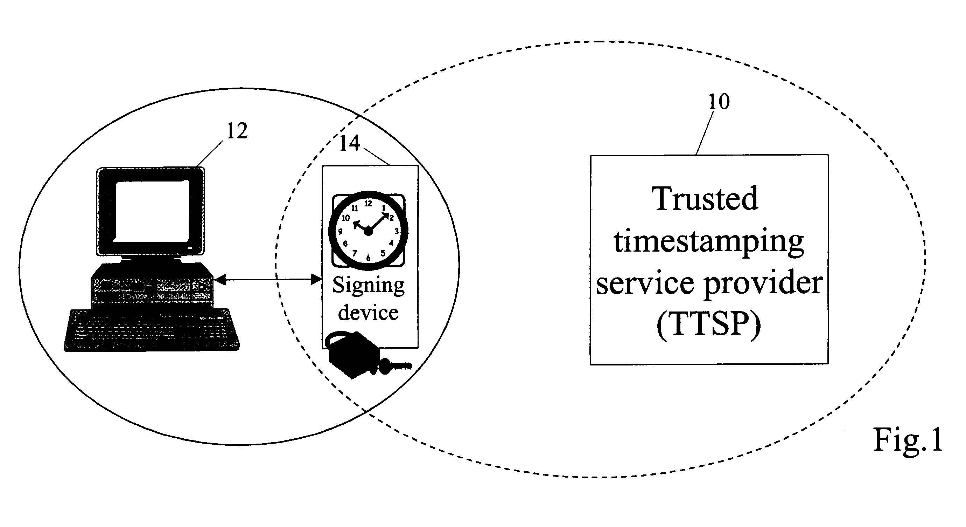

Referring to Figure 1, a TTSP 10 loans a user who wishes to obtain timestamps a signing device 14. This dedicated device is enclosed in a sealed tamperproof enclosure, and can be connected to the user's local network, or linked to their computer or workstation 12 by a Universal Serial Bus (USB) or Small Computer Systems Interface (SCSI) connection. The signing device 14 performs the required timestamping and signing locally to the user, i.e. without direct connection to the TTSP 10: the user sends it a message, and the device 14 signs the message and returns it. The signing device 14 contains a tamper proof clock, a certificate and the only copy of a private key; the certificate authenticates the identity of the TTSP 10, for example using known digital certificate systems based on public key encryption techniques.

The TTSP 10 provides two services:
1. It manufactures the signing device 14, pre-programming it with a unique certificate and an associated private key;
2. It provides the service of verifying that specific data were timestamped by a particular signing device.

Because the signing device 14 is merely loaned to the user, they have no right to open the enclosure, and must return the device on demand. At least two variants of the signing device 14 are envisaged. In the first variant, the device ceases to function after certain conditions have been met (e.g. expiry of a predetermined time period) and must be returned to the TTSP for disposal (i.e. from the user's viewpoint the signing device is disposable). In the second variant, the signing device 14 may be re-certified in situ.

This arrangement has several advantages. For the user these include:
- faster timestamping (the delay incurred while messages traverse the Internet is avoided, because the signing device 14 is local to the user);
- the user can be mobile, and does not have to be connected to the Internet; indeed the signing device 14 can be embedded inside a portable device such as a laptop or handheld computer or a mobile telephone;
- more extensive use of timestamping is facilitated - any digital intellectual property can now be protected;
- timestamping becomes essentially free or very low in cost.

The TTSP 10 benefits in the following ways:
- there is no need to provide large servers to perform the high volumes of timestamping in response to customer requests;
- a "consumable" business model for selling private keys becomes feasible. The signing device 14 can be used in a number of ways, such as:

1. Auditable log files transactions and other operations (e.g. in a computer); the signing device 14 permits every log entry to be timestamped.
2. Intellectual property protection; it is important to be able to prove that an idea was documented by a particular date, and that the documentation has not been subsequently modified; the timestamp can be used in relation to any digital content - video clips, compressed (e.g. JPEG) material, sound files, text files, etc.
3. E-mail systems, to verify a message has not been altered and existed at a particular time.
4. Merchant receipts (i.e. digital till rolls).
5. Built-in to a digital camera so that a photograph is timestamped to indicate when it was generated, and possibly which camera took the photograph; this would make it possible to prove that the photograph predates all other copies of it, and has not been tampered with.
6. As an extension to computer operating systems, to ensure that timestamps associated with the system and data used in it are generated by a trusted third party; this would prevent a user from rolling back the system clock to continue running software after expiry of a period of licensed use.
7. In timestamped digital audio tape (DAT), CD-read/write (CD-RW) or writable digital versatile disc (DVD-RAM) storage devices; such devices would timestamp and digest each data block, or each file, with the timestamp being stored on the media.

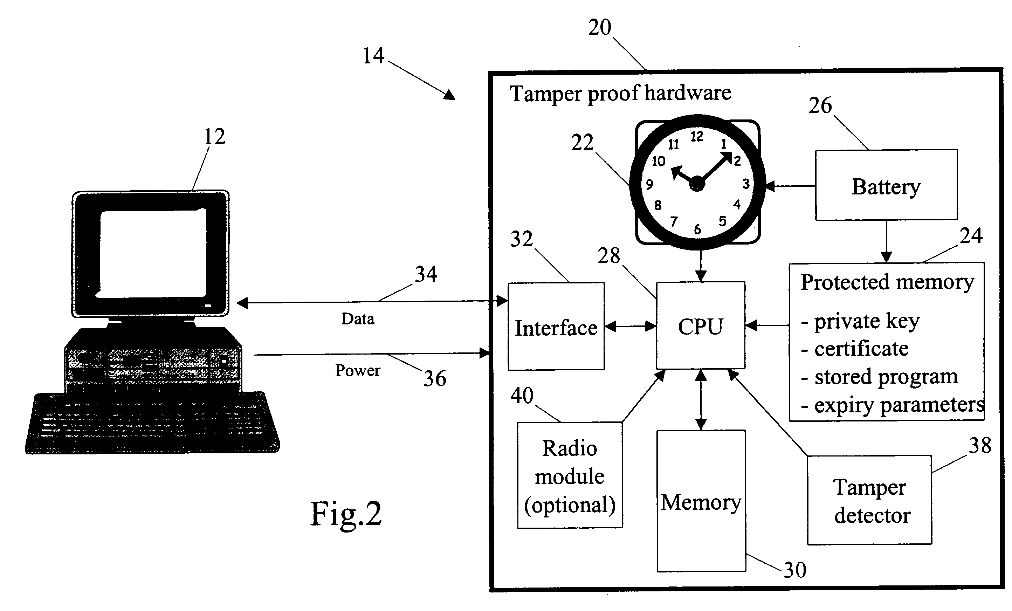

Figure 2 shows a practical implementation of the signing device 14. Referring to Figure 2, the device has a tamper proof enclosure 20, which is required to prevent access to the components of the device (e.g. to extract the private key) or their alteration (e.g. to change the time in the clock). The enclosure can be made effectively tamper proof by, for example, encasing the entire assembly in resin. Desirably the device 14 should detect attempts to tamper with it, either physically or by application of data signals, and respond by disabling itself to prevent further use. Attempts at physical intrusion could be detected, for example, by means of a network of fine wires embedded in the resin and which would be broken if the resin is disturbed, or by means of microswitches arranged to operate if the enclosure is opened. Attempts at intrusion via the interface can be detected by monitoring for excessive numbers of improperly formatted input signals.

As already noted the device 14 contains a clock 22 which may indicate date and time according to a specified standard, such as Co-ordinated Universal Time (UTC), or time elapsed (e.g. in seconds) since a predetermined start instant. The design of the clock depends on the accuracy and resolution with which timestamps are required over the intended working life of the signing device 14. For many purposes a drift of a few (c. 10) seconds a year is tolerable and this is readily achieved with modern quartz-oscillator clock circuits; in some cases a drift of no more than 0.1 seconds per year may be required. Other techniques may be used as discussed below.

The private key and certificate are stored in a "protected" memory 24 which, together with the clock 22, is supplied with power by a battery 26 even when the device 14 is unconnected. The memory 24 is protected in the sense that its contents cannot be read directly, either in response to input electrical signals or by physical examination. A CPU 28 (selected for high processing power and low power consumption) executes instructions in a program stored in the protected memory 24, using a second read-write memory 30 for intermediate results. The CPU 28 communicates with the user's computer or workstation 12 via an interface 32 and a data link 34; an associated power line enables the device 14 to obtain power from the workstation 12 so that the battery 26 is reserved for backup purposes (and can if desired be re-charged provided its voltage has not dropped too low - see below).

A tamper detection module 38 within the device 14 is coupled to the CPU 28 to indicate any attempt at tampering or intrusion; the CPU 28 responds to such an indication by disabling the device 14, either permanently or until its integrity has been checked by the TTSP 10. If desired a radio module 40 for receiving broadcast time signals may be provided, to enable the clock to be corrected for drift as described below.

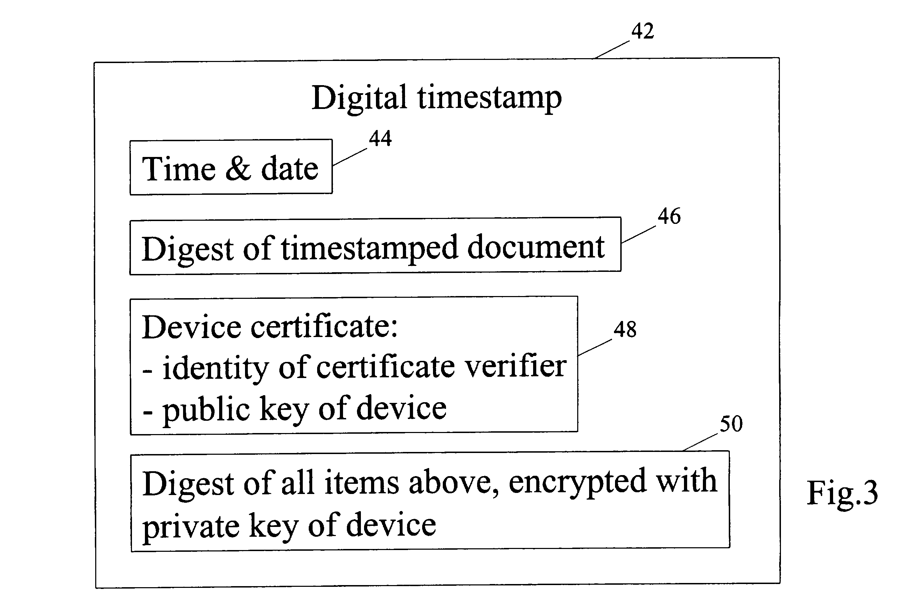

The operation of the signing device 14, in outline, is as follows. When the user wishes to add a timestamp to a data file, the workstation 12 sends a message over the data link 34 to the device 14; this message may contain either the data file itself or digest created from the message using, for example, a hashing algorithm. In response the CPU 28 obtains the current time and date from the clock 22, and the private key and certificate information from the protected memory 24. The CPU 28 uses these items of information to assemble a digital timestamp 42 as shown in Figure 3, and comprising:
- a record 44 of the date and time, and if desired a sequence number;
- a digest 46 of the data to be timestamped (obtained for example by hashing), enabling the timestamp to be uniquely related to the data without having to incorporate the data themselves (possibly very large in quantity) in the timestamp;
- a copy 48 of the digital certificate for the signing device 14 authenticating its identity, including the identity of the organisation which issued that certificate and the public encryption key of the signing device; and
- a digest 50 of the items 44, 46 and 48, encrypted with the signing device's private encryption key, for use as a safeguard against fraudulent timestamps.
The CPU 28 then returns the timestamp to the workstation 12 over the data link 34. Various aspects of the design and operation of the device 14 are discussed below.

A family of signing devices 14 varying in capability is envisaged. For example, the signing device 14 may be connected to the workstation 12 via:
- a SCSI port;
- a serial port;
- a parallel port;
- a USB port;
- a PCI card;
- a PCMI card;
- a network, such as 10BaseT, 100BaseT, IP v4;
or it may be built-in to the workstation 12. The network option would make it possible for the signing device 14 to be used by multiple computers. However, this would require encrypted, authenticated, connections, perhaps using SSL. In addition, the network variant creates the possibility of having concurrent requests - necessitating either multiprocessing or queuing of the requests. Building Personal Digital Assistants (PDAs) or other kinds of handheld computing devices with a built-in signing device would permit mobile users to send timestamped/signed e-mails, with greater integrity than faxes.

The signing device can offer one or more of the following capabilities:
- signing, using a variety of algorithms;
- timestamping and signing;
- Message Authenticating Code (MAC) - i.e. a message digest with an associated key;
- inserting and removing messages from digital envelopes.

The user could be enabled to select which operation to perform, and to choose among different formats for the result of that operation.

Various arrangements are possible as regards limiting use of the signing device 14 to a single workstation:
- the signing device does not know the identity of the workstation;
- the signing device collaborates with the host computer to confirm that it is the permitted user;
- the signing device has a smart card reader, or similar device, to enable it to confirm the identity of the user.

Where the signing device is dedicated to a single workstation, different levels of security may be provided:
- check the identity of the host computer 12 only on installation;
- permit the identity of the host computer to be set only on installation;
- permit the identity of the host computer to be changed at any time;
- check the identity of the host computer periodically - every hour, every minute, ... ;
- check the identity of the host computer for every request.
The identity of the host computer 12 may be established by the host computer's downloading a certificate acceptable to the signing device 14. Verifying the identity of the host would be performed by the signing device's sending a challenge to the host. The host would be expected to encrypt the challenge with its private key corresponding to the registered certificate. The signing device would use the public key to decrypt and verify the response. Permitting the identity to be changed periodically would permit the signing device 14 to be made user oriented rather than computer oriented.

Various options are possible for treatment of the signing device 14 at the end of its useful life:
- the device is returned to the TTSP after a pre-set period of time, or amount of usage;
- the device is capable of being certified for another period of use, without being returned to the TTSP. This would desirably entail the issue of a new serial identity code and private key.

Occasionally it will be necessary to check that a timestamped document was indeed signed by a particular device 14 at a given time and has not been amended. There are two alternatives for checking the integrity of the signed document:

### By the signed document owner

The signed message contains a certificate of the signing device 14. The public key may be easily extracted from this certificate. The message can now be checked to ensure that it is correctly signed. The certificate authority that issued the certificate can also be contacted to ensure that the certificate was valid at the time of signing. Thus the validity can be checked by anyone with a copy of the signed message.

### By the trusted verifier

The signed message can be sent back to the TTSP, or other trusted verifier, and they can check the message and return the timestamp, the identity of the signing device and a boolean value indicating whether the document is intact or, possibly, corrupted. In practice all of the checks performed by the TTSP can be performed by anyone with a copy of the signed document. Connection to the TTSP would be via asymmetric SSL (as the requestor needs to know they are connected to a respected verifier). Once the signing device 14 has been withdrawn from service and returned, the TTSP may determine its clock drift etc. during its period of use and be able to make further guarantees as to interpolated clock drift at the time of timestamping. They can also confirm the physical integrity of the signing device.

The purpose of the signing device 14 is to sign a certificate saying that it inspected the message at a particular time. It should not be possible to forge these certificates. Thus it should not be possible to alter the clock 22 to a time of an attacker's choosing. Various levels of guaranteed time accuracy are possible:
- a quartz clock with a drift of some predefined value *n*₁ seconds over 1 year;
- a thermally controlled quartz clock with a drift of *n*₂ (*n*₂ < < *n*₁) seconds over 1 year - implemented for example using a Peltier-effect oven;
- use of external radio time sources to update the clock 22 by means of radio signals received by the radio module 40; these time sources include
   cell phone eavesdropping (to detect time signals embedded in the cell phone signals);
   Global Positioning System (GPS) signals;
   time reference signals broadcast from, for example, Rugby (England), Frankfurt (Germany) or Boulder (USA).

It is important that options using external time references are carefully designed to counter the possibility of using the external time reference as the basis for an attack to create a fraudulent timestamp. This can be accomplished, for example, by letting the clock 22 run independently and monitoring its drift relative to the external time reference. If the drift gets too large (say greater than 1 second per day) then something is assumed to be wrong - the clock 22 is failing or the device is being attacked - and disabling of the device is triggered. Similarly, if the external time reference is unavailable for too long then the accuracy guarantees cannot be maintained and the device should disable itself.

Each signing device 14 will have its own clock 22 and these will not be synchronised. Therefore it is not possible to take timestamps from different signing devices and determine with any certainty which was issued first - the clocks will be different and will drift differently over time.

It is also possible to monitor multiple time references. If the clock 22 is found to be running too fast, then it should be set back. However, it is important that timestamps have strictly increasing (monotonic) times. If the resetting were done naively it might result in a timestamp being issued with an earlier time than a previously-issued timestamp. In this case resetting of the clock should be deferred until it is safe to set the clock back (i.e. the adjusted time is later than the value of the last timestamp issued), or the clock should be slowed down until it matches the time reference.

If the signing device 14 detects that it may have been compromised, it will disable itself. This may happen, for example:
- if there is any attempt to tamper with the hardware;
- if there is any attempt to tamper digitally via the interface 32;
- after some predefined number, say 1,000,000, timestamps have been issued;
- after some predefined period of time, say 12 months;
- after any significant drift between the internal clock and any external time reference (i.e. clock malfunction or external attack);
- after disconnection from external time reference for too long;
- after being commanded to disable by TTSP;
- after being commanded to disable by the user;
- after the battery voltage drops below a pre-set threshold;
- after apparent clock malfunction - e.g. time has not incremented since the last clock reading.

Upon disablement the TTSP will need to be informed and the device 14 returned to the TTSP. The TTSP would have to announce that the certificate has been retired. It is possible to resurrect a signing device by replacement of a memory module (such as a SIMM) containing a new certificate and private key, as described below, but this capability might itself pose a security risk.

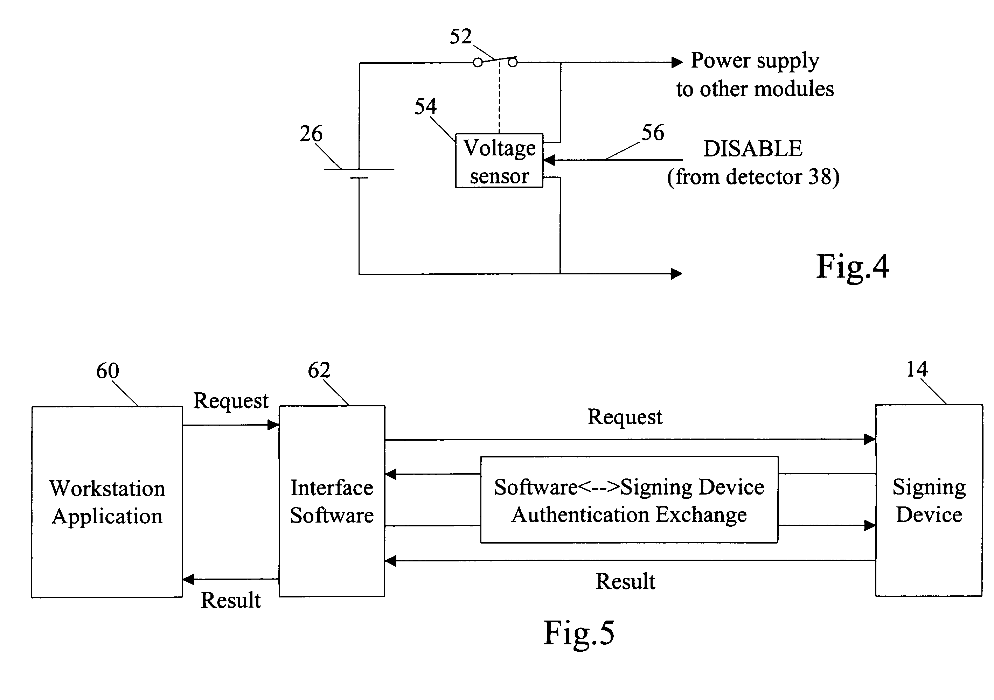

Figure 4 shows how the signing device 14 can be disabled in the event that the battery voltage drops too low. The battery 26 is coupled to the rest of the circuitry in the signing device through a switch 52 controlled by a voltage sensor 54 coupled to sense the battery voltage via the switch. While the battery voltage is above the pre-set threshold, it suffices to cause the voltage sensor 54 to keep the switch 52 closed. However, if the voltage once drops below the threshold, the switch 52 is caused to open, thereby removing power from the signing device circuits including the voltage sensor 54 itself. Thereafter, even if the battery is replaced or recharged, the open switch 52 blocks the supply of power to the voltage sensor 54, so the signing device is disabled. The voltage sensor 54 may conveniently have a disable input 56 which can be activated by the tamper detection module 38 to open the switch 52 in the event that tampering with the signing device 14 is detected.

It is undesirable for a signing device 14 to be used for too long - its private key stands more chance of being compromised the longer it is used. Accordingly, a usage limiter is provided to cause the device 14 to disable itself, as noted above, after a pre-set time (e.g. 12 months) or after it had issued a pre-set number (e.g. 1,000,000) of timestamps. These parameters are stored in the protected memory 24. The device's certificate would then be retired. The user would have to pay for a new device with a new certificate and private key - this would probably be acceptable if the device is reasonably cheap. Other advantages of having the device 14 in use for a fixed period of time only are that the capacity of the battery 26 can be chosen to ensure it is sufficient to operate the clock 22 for the designed period of use, and that the clock's drift should stay within closely definable limits.

At the end of the device's lifetime there are two strategies that may be adopted:
- physically return the device to the TTSP for disposal or recycling of the hardware; or
- replace the key components (the private key and the certificate) to re-certify the device in-situ via the use of a SIMM. This would only be appropriate if the clock 22 can be checked for drift.

It is possible to provide a secure communications link to the TTSP in a number of ways, such as that described for example in European patent application 0 756 397. In this scenario, the signing device 14 would contain a large quantity (e.g. 20 megabytes) of one-time pad encryption key agreed with the TTSP. All communications between the signing device and the TTSP would be exclusive OR'ed with sections of the one-time pad key, each section being used once only. When all of the one-time pad key has been used, the signing device would have to be physically returned to the TTSP.

Smartcards (credit cards containing processing and memory devices) can provide some of the functionality required for the signing device 14. They are typically very secure, and so could safely contain the private key. They can also in principle support cryptographic operations. However, they have a number of deficiencies which would preferably be rectified for practical use:
- they have no internal power source;
- they have no clock;
- they have limited memory capacity;
- the eight input/output (I/O) lines are not very robust - although are probably good enough if they are not being continually inserted and removed;
- they have a slow I/O transfer speed e.g. as low as 9600 baud.
Nonetheless smartcards could provide a way of personalising a signing device, in the same way that a SIMM module is used to personalise a GSM mobile phone. Thus a smartcard could be placed inside the signing device 14 and then the enclosure sealed.

Figure 5 shows one possible implementation of the interface module 32 for communication with the workstation 12. Referring to Figure 5, an application program 60 sends a timestamp request to interface software 62 associated with the signing device 14. This interface software 62 provides a set of standard application programming interface (API) functions, e.g. to request signing of a message. Actual communications between the workstation 12 and the signing device 14 are handled solely by the interface software 62. Only when the signing device 14 is satisfied predetermined criteria have been met, e.g. following an exchange of challenge-response messages with the interface software 62, does a timestamped message get passed back to the software 62 for forwarding to the application program 60. In this way the signing device include various authentication protocols in the process of issuing a timestamped message.

The signing device 14 might require the host workstation 12 to refer back, periodically, to the TTSP for instructions. Only if the correct responses are forwarded by the host from the TTSP would the signing device continue working.

Various implementations of the signing device 14 are possible. The simplest signing device produces a timestamped signature of a message sent by the user. Typically this message is a digest of a document, providing two advantages over sending the document itself to the signing device:
- the delay incurred in sending the (potentially) large document to the signing device is avoided;
- the signing device cannot see the contents of the document.

The protocol is as follows:
1. the user submitter sends *{message}* to the signing device 14;
2. the signing device sends *signature(signing device's certificate, {message, timestamp})* back to the user.

The signing device is basically indicating that it 'saw' the message at a particular time. It does not say anything about who supplied the message.

### Variant #1

The first variant of the basic timestamping signing device produces a timestamped signature of a document. The signing device produces a digest of the document, which is then timestamped and signed.

The protocol is:
1. the user sends *{doc}* to the signing device 14;
2. the signing device sends *signature(signing device's certificate, {digest(doc), timestamp})* to the user.
The timestamped signature now contains details of who signed the document (in the certificate 48), the digest of the document and the time (as seen by the signing device) when the document was signed.

This permits the TTSP to vouch that the original document was seen, and not just a digest of the message, at a particular time. The enclosed digest of *{doc}* permits the TTSP, and any other interested party, to check the digest against the document to ensure it has not been modified. Again, this variant provides no information about the identity of the submitter.

### Variant #2

This variant combines the basic signing device with variant #1. The user provides two pieces of information - a document and a message. The message and a digest of the document are embedded in the timestamped signature.

The protocol is:
1. the user sends *{doc, message*} to the signing device 14;
2. the signing device sends *signature (signing device's certificate, {message, digest(doc), timestamp})* to the user.
Typically, the user might use the message field to supply a certificate. Obviously, the signing device does nothing with the message field other than to embed it, and protect it, in the result.

### Variant #3

It is possible to use variant #2 to store a certificate of the submitter in the timestamp. However this does not mean that the TTSP is verifying the owner of the certificate as being the user. Certificates are public knowledge and can be copied or forged.

So another variant of the signing device might also verify the identity of the submitter. To this end:
1. the user sends *{doc, submitter certificate}* to the signing device 14;
2. the signing device sends *{E(public key from submitter certificate, random message)}* to the user;
3. the user sends *{random message*} to the signing device;
   the submitter must use their private key to extract the random message, thus proving they own the certificate; the signing device 14 checks the random message is returned correctly to ensure the certificate is valid;
4. the signing device sends *signature(signing device's certificate, {digest(doc), timestamp, submitters certificate})* back to the user.
The timestamped signature now contains details of who signed the document, the digest of the document, the time (as seen by the signing device) when the document was signed and details of who submitted the document.

A LAN-connected version of the signing device 14 would probably use SSL to ensure encrypted, authenticated links. The submitter's certificate would be known to the signing device and so verification would not be required.

It is unlikely that the signing device would go back to the certificate issuing authority to check the supplied certificate is still valid. That would be up to the user of the timestamp information to verify. The signing device is simply accepting the certificate as data, checking it was owned by the submitter and then embedding it inside the timestamp.

Although the invention has been described in the context of providing trusted timestamps, it can be applied equally to the provision of any other kind of trusted service, such as the signing of messages without timestamping, or the provision of secure random numbers for use as seeds or keys in encryption.

## Claims

1. A device for providing a local trusted service to a user, having an enclosure and comprising within the enclosure:
a trusted service generator;
a usage limiter;
an identity generator;
a private key store which is inaccessible from outside said enclosure; and
an interface for enabling communication between said user and said trusted service generator.

2. The device of claim 1, wherein the enclosure is tamper-proof.

3. The device of claim 1 or claim 2, wherein the usage limiter comprises a trusted counter adapted to be incremented or decremented every time the trusted service is invoked until a predetermined number is reached, whereupon the device ceases to be able to provide the trusted service.

4. The device of claim 1 or claim 2, wherein the usage limiter comprises a trusted clock, and wherein the device is adapted such that when a predetermined time is reached on the trusted clock, the device ceases to be able to provide the trusted service.

5. The device of any one of the preceding claims, wherein the trusted service generator is a trusted clock having an associated power source and the identity generator identifies a guarantor of the validity of timestamps provided by the trusted clock.

6. The device of any one of the preceding claims, including a power source and wherein the device disables itself from providing the trusted service if a functional parameter of the power source ceases to satisfy a predetermined criterion.

7. The device of claim 6, wherein the predetermined criterion requires that the power source voltage always exceeds a predetermined threshold value.

8. The device of claim 6 or claim 7, wherein an electrically-operated switch which controls supply of power to circuitry in the device, including the switch itself, is held closed by the power source while the predetermined criterion is satisfied, and opens to disable the circuitry, including the switch, if the criterion ceases to be satisfied.
